# EUROPEAN PATENT SPECIFICATION

(11) **EP 2 293 911 B1**
(45) Date of publication and mention of the grant of the patent: **16.03.2016**
(21) Application number: 08874715.9
(22) Date of filing: 22.10.2008
(51) Int. Cl.: B29C 45/73, B29C 33/04

(54) **METHOD OF RAPIDLY HEATING MOLD APPARATUS**
VERFAHREN ZUR SCHNELLEN ERWÄRMUNG EINER FORMVORRICHTUNG
PROCÉDÉ DE CHAUFFAGE RAPIDE D'APPAREIL DE MOULAGE

(30) Priority: 19.06.2008 KR 20080058073
(43) Date of publication of application: 16.03.2011
(73) Proprietor: Unibell Co., Ltd., Paltan-myeon, Hwasung-si Gyeonggi-do (KR)
(72) Inventor: CHO, Kook-Hyun, Gyeonggi-do (KR)
(74) Representative: Beier, Ralph
(86) International application number: PCT/KR2008/006233
(87) International publication number: WO 2009/154332

(56) References cited:
- JP-A- 9 314 561
- JP-A- 2000 102 958
- JP-A- 2000 102 958
- JP-A- 2004 082 458
- KR-Y1- 200 350 555

## Description

### [Technical Field]

The present invention relates to a method of rapidly heating a mold, and more particularly, to a method of rapidly heating a mold, which makes it possible to rapidly heat and fast cool a mold used for making a plastic molded article.

### [Background Art]

In these days, various kinds of products are made by molding plastic. It is well known in the art that various mold apparatuses are used for molding plastic. A plastic molded article can be made using a mold apparatus owing to the temperature characteristic of plastic. Plastic materials generally have plasticity or fluidity at a high temperature, but they lose plasticity and fluidity at a low temperature and keep a predetermined shape fixedly.

In a case where a plastic molded article is made using a mold apparatus, most important technical things are to uniformly deliver a plastic resin material to be injected into a mold to a cavity with a shape of a resin molded article, to make the resin molded article into a designed shape in the cavity, and to rapidly separate the final molded article from the cavity rapidly without any distortion or deformation and take it out. All of such processes are directly influenced by temperature conditions in the mold apparatus. It means that the final plastic molded article may exhibit entirely different qualities depending on the facts how fast a temperature condition in the mold apparatus can be controlled, how uniformly the temperature condition can be kept, and how fast and uniformly the temperature condition can be changed.

Generally, a mold apparatus includes the following components. The mold apparatus includes an upper mold configured to be vertically movable, a lower mold capable of being coupled to the upper mold, and a cavity defined between the upper and lower molds coupled to each other, wherein the cavity has a predetermined 3-dimensionally designed space to make a plastic molded article.

Further, the mold apparatus includes an injection unit for melting a molding material such as resin at a high temperature to give fluidity thereto and then injecting the molding material into the mold, and a flow runner formed to guide the molding material injected from the injecting unit into the cavity that is a final destination. Furthermore, the mold apparatus has a plurality of channels for providing a uniform temperature to the inside of the upper and lower molds or uniformly cooling the inside thereof.

In such a mold apparatus, the melt of the plastic resin that is heated at a high temperature from the outside and then injected is guided into the cavity through the injecting unit and the flow runner, and then filled in the cavity. Thereafter, the melt is cooled therein and molded into a predetermined 3-dimensional shape, thereby forming a plastic molded article. Then, the upper mold is separated from the lower mold, and the plastic molded article is taken out.

In the conventional mold apparatus, a plurality of channels are formed inside of the mold for keeping the upper and lower molds at a high temperature such that a plastic melt may rapidly and uniformly flow into the cavity, and the channels is provided with hot water or moisture from the outside. Also, in a case where a plastic molded article is made to have a predetermined shape in the cavity, in order to rapidly cool the upper and lower molds, cooling water is supplied from the outside through the plurality of channels.

However, if this method is used, hot water or moisture should be supplied from the outside, so that a boiler should operate additionally and a mold temperature controller should be installed in order to control the temperature of the hot water or moisture supplied from the boiler. In such a case, a high temperature/pressure boiler should be installed, which needs excessive installation costs. In addition, a pipe should be additionally installed from the boiler to the final mold, which increases the installation costs.

Moreover, this method makes it substantially difficult to obtain a high temperature of 120°C or higher, and a large amount of energy should be inputted to obtain a high temperature of 120°C or higher. Further, in order to generate and deliver the high temperature moisture, a high pressure boiler and a high pressure pipe should be installed, which reveals a variety of limitations on economical efficiency and safety.

Meanwhile, as the work for generating high temperature/pressure water or moisture at the outside and then delivering it into the mold apparatus revels many limitations on technical and economical aspects, there is an attempt to develop an apparatus which includes a high temperature heat source installed directly to an inside of upper and lower molds and a means for cooling the inside thereof. Such an apparatus are disclosed in Korean Laid-open Patent Publication No. 2007-44251 (entitled "Mold apparatus and Heater cartridge for molding"), 2007-52873 (entitled "Heater cartridge"), and 2007-53507 (entitled "Mold apparatus").

In all the inventions disclosed in the three Korean Laid-open Patent Publications introduced above, one cartridge is configured to be detachably installed to a channel of upper and lower molds, and the cartridge includes an outer body, a electric heat source installed in the outer body, and a cooling unit provided inside of the electric heat source.

However, the cartridges disclosed in the aforementioned three publications are substantially not mounted and used to the upper and lower molds. It proves that these cartridges cannot substantially perform the functions as disclosed in the applications when they are used for the upper and lower molds.

First of all, in order to produce a plastic molded article of good quality, it is required to rapidly supply high temperature heat over the entire region of the upper and lower molds, to keep the temperature uniform for a certain time in such a state, and then to rapidly and uniformly cool the upper and lower molds again. However, the cartridges disclosed in the above publications cannot properly perform such functions.

JP 9 341561 A discloses a method of rapidly heating and cooling a mold according to the preamble of claim 1. However, the arrangement disclosed in document D1 needs separate condenser tubes for cooling the mold. Therefore, the cooling of the mold is not very efficient and quite slow.

Further, reference is made to JP 2000 102958 A.

### [Disclosure]

### [Technical Problem]

An object of the present invention is to provide a method of rapidly heating a mold, which can directly deliver high temperature heat generated inside of channels of the mold to the mold through surfaces of the channels.

Another object of the present invention is to provide a method of rapidly heating and cooling a mold, which can directly deliver high temperature heat generated inside of channels of the mold to the mold through surfaces of the channels and then directly cool the mold through the surfaces of the channels after completing the molding work.

A further object of the present invention is to provide a heater unit suitable for implementing the method of rapidly heating a mold.

### [Technical Solution]

According to an aspect of the present invention is provided

A method of rapidly heating a mold according to the present invention includes a heater unit coupling step S210 of inserting a heater unit into a channel of a mold and coupling the heater unit to the mold; a heat transfer medium filling step S220 of introducing a heat transfer medium into the channel through an inlet port connected to the inside of the channel and closing an outlet port connected to the outside of the channel and the inlet port connected to the inside of the channel when the channel is filled with the heat transfer medium; and a heater unit heating step S230 of heating the heater unit in the channel so that the temperature of the heat transfer medium is increased to a high temperature, thereby increasing the temperature of the mold to a high temperature by the heat transfer medium.

The present invention further includes a molding step S240 of molding a molded article in a mold; and a mold cooling step S250 of rapidly and continuously putting a new low temperature heat transfer medium into the channel through the inlet port from the outside, thereby discharging the existing high temperature heat transfer medium having existed in the channel to the outlet port, causing the new low temperature heat transfer medium to absorb high temperature heat of the channel and the mold, and at the same time continuously discharging the heat transfer medium that absorbs the high temperature heat to the outside through the outlet port, and thus lowering a temperature of the mold to a predetermined temperature.

A heater unit for a mold according to the present invention comprises a heater for generating high temperature heat by external electric energy; a protective member provided outside of the heater to protect the heater; a cable member for transmitting electric energy to the heater; and a coupling member for holding the heater and the cable member and coupling them to the mold.

According to the present invention, the heater unit preferably has a shape selected from the group consisting of circular, quadrangular, polygonal and curved cylindrical shapes according to a shape of the mold.

In addition, according to the present invention, the heater unit may comprise one or more heaters for one coupling member.

### [Advantageous Effects]

The method of rapidly heating a mold according to the present invention allows a heater unit to be directly mounted in a channel of the mold and the heater unit to be heated while the channel of the mold is closed. Thus, there is an advantage in that it is possible to obtain ultra high temperature heat rapidly and economically and accordingly the heat can be rapidly transferred to the mold and heat the mold.

Further, according to the method of rapidly heating a mold of the present invention, the high temperature heat generated by the heater unit is not lost to the outside but can be rapidly transferred to the mold as it is, so that its thermal efficiency is very high.

Furthermore, the method of rapidly heating a mold according to the present invention makes it possible for a mold to reach an ultra high mold temperature (for example, 250°C or above), which was impossible in a prior art, so that the present invention can be particularly usefully applied when a molding work should be performed under an ultra high temperature.

### [Description of Drawings]

Fig. 1 is a block diagram schematically illustrating a method of rapidly heating a mold according to the present invention;
Fig. 2 is a schematic view showing that a heater unit is coupled to the mold to implement the heating method of the present invention;
Figs. 3 to 6 are views showing preferred embodiments of the heater unit for a mold, which are suitable for implementing the heating method of the present invention;
Figs. 7 and 8 are views showing an embodiment wherein a plurality of heater units are installed to one mold to implement the heating method of the present invention;
Figs. 9 and 10 are plane views showing that the heating method of the present invention is practically applied to a mold; and
Fig. 11 is a view conceptually showing an experimental example wherein the method of rapidly heating a mold according to the present invention is implemented.

### [Best Mode]

Hereinafter, the present invention will be described in detail with reference to the accompanying drawings. However, the accompanying drawings are only for illustrative purposes and not intended to limit the technical spirit of the invention.

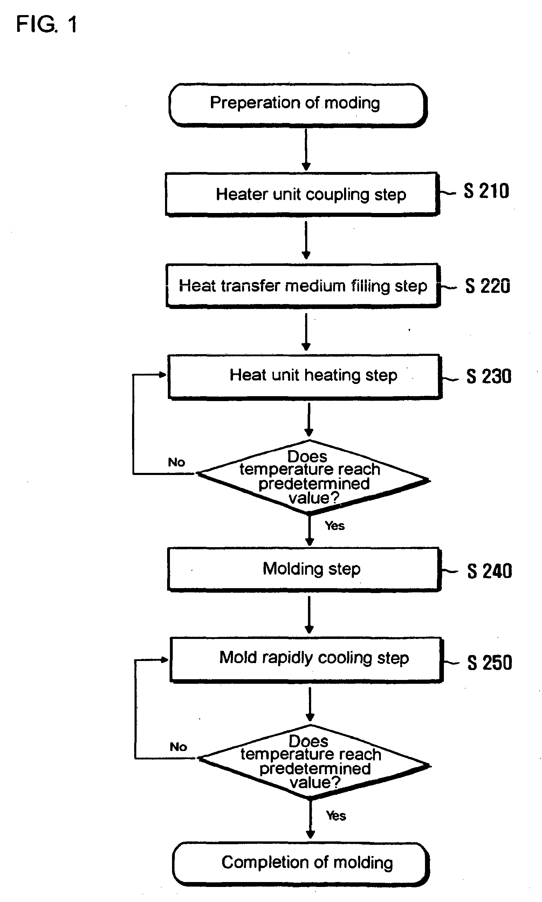

Fig. 1 is a block diagram schematically illustrating a method of rapidly heating a mold according to the present invention.

The method of rapidly heating a mold according to the present invention includes a heater unit coupling step S210, in which a heater unit 100 is inserted into a channel of a mold and the heater unit 100 is coupled to the mold.

In the present invention, the mold 10 includes a channel 20 through which a heat transfer medium passes and a cavity 30 that is filled with a melted molded article to form a predetermined shape.

In the present invention, in a state where a heat source is mounted in the channel 20 and a heat transfer medium is put into the channel 20, the heat transfer medium is directly heated by the heat source, and also the high temperature heat transfer medium directly heats the mold 10 and the cavity 30. In other words, although in the prior art, a heat transfer medium is heated to high temperature at the outside and then introduced into the channel 20, in the present invention, a heat transfer medium is not heated at the outside but directly heated in the channel 20, so that the present invention is entirely different from the prior art in aspect of heating manner. In the present invention, the direct heating manner means that the heat transfer medium comes into direct contact with and heats the mold while no member is interposed between the heat transfer medium and the mold.

In the present invention, in order to directly heat the heat transfer medium within the channel 20, it is preferred that the heater unit 100 as a heat source be inserted into the channel 20 and the heater unit 100 be coupled to the mold 10.

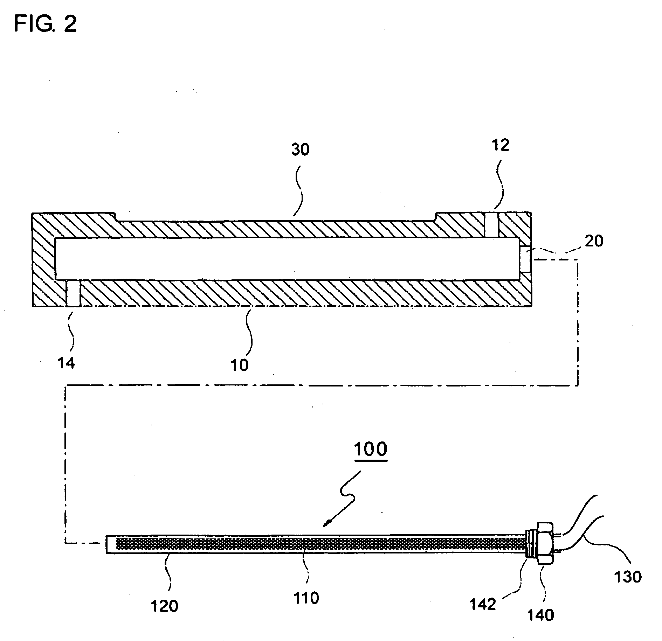

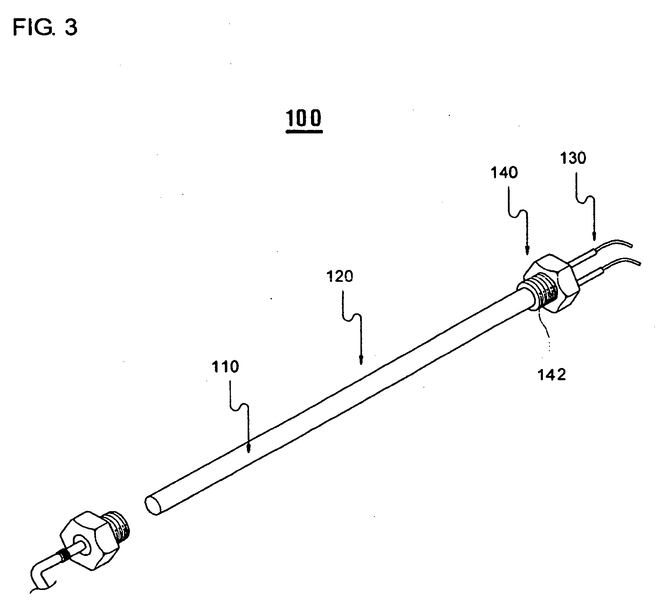

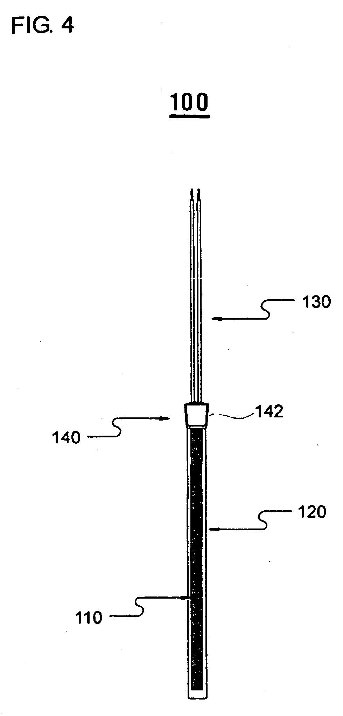

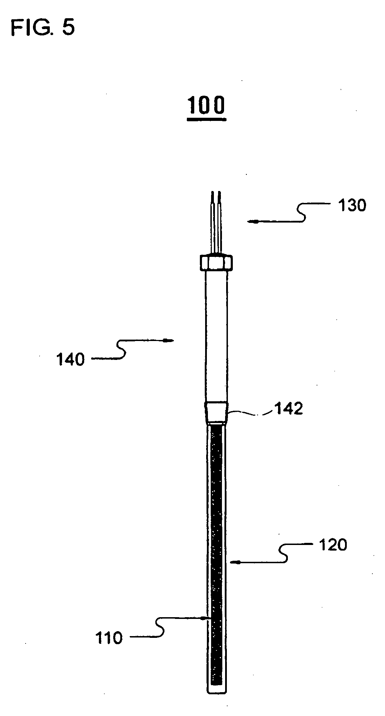

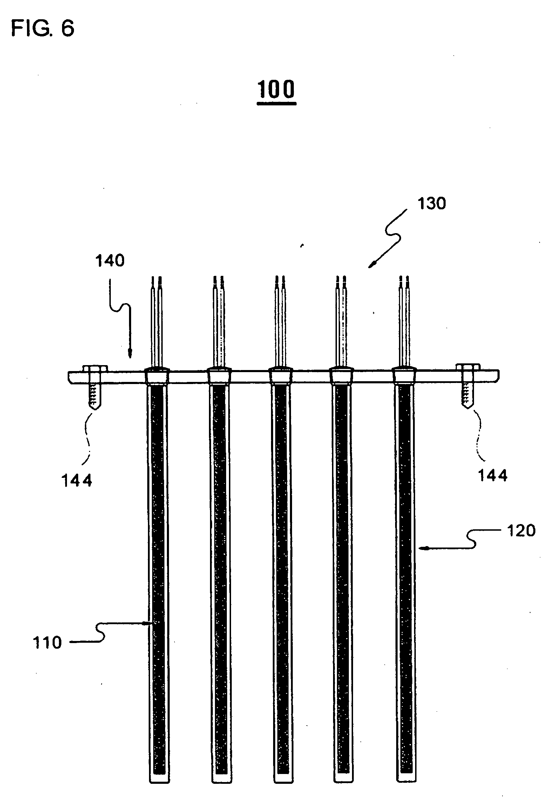

Fig. 2 is a schematic view showing that the heater unit 100 is coupled to the mold 10 to implement the heating method of the present invention, and Figs. 3 to 6 are views showing preferred embodiments of the heater unit 100 for a mold, which are suitable for implementing the heating method of the present invention

In the present invention, the heater unit 100 for a mold includes a heater 110 for generating high temperature heat by external electric energy. The heater 110 is to convert electric energy supplied from the outside into Joule heat and is generally composed of a resistance coil. The heater 110 is protected by a protective member 120, which is provided to surround the heater 110.

In the present invention, the heater 110 generates heat only when electric energy is supplied thereto from the outside. The heater 110 is connected to an external power source through a cable member 130, and the cable member 130 serves to transmit external electric energy to the heater 110.

Also, in the present invention, the heater unit 100 for a mold preferably includes a coupling member 140 for holding the heater 110 and the cable member 130 and allowing them to be coupled to the mold 10. The coupling member 140 preferably has a thread 142 formed on its outer surface. The coupling member 140 is not limited thereto but may have other configurations capable of being coupled to the mold 10. The thread 142 is preferably coupled to a thread formed at an inlet of the channel 20 of the mold 10, and in this case, it is important that the channel 20 is completely sealed at the coupling portion. This is the reason why a predetermined pressure may be applied into the channel 20 later, and in this case, the complete sealing prevents the heat transfer medium from leaking at the coupling portion and also the channel 20 should be endure the internal pressure.

In the present invention, the heater unit 100 for a mold may have a shape slightly varying depending on the channel 20 of the mold, wherein the heater 110 and the protective member 120 may preferably have any one shape selected from the group consisting of circular, quadrangular, polygonal and curved cylindrical shapes. In the accompanying drawings, the circular cylindrical shape is representatively illustrated.

Also, in the present invention, the heater unit 100 for a mold may include one or more heaters 110 to the single coupling member 140. In this case, for the mold 10, a plurality of the heaters 110 are housed in the single channel 20. Also, in this case, since a heat transfer medium filled in the single channel 20 maintains a constant temperature, there is an effect in that the uniform temperature may be transferred to the entire mold.

In the present invention, the heater unit 100 for a mold may be coupled to the mold 10 in a general manner. For example, the heater unit 100 may be coupled to the mold 10 by using the thread 142 formed on the outer surface of the coupling member 140. Alternatively, the coupling member 140 may be coupled to the mold 10 using additional bolts 144.

The method for rapidly heating a mold according to the present invention includes a heat transfer medium filling step S220 of filling the channel 20 with a heat transfer medium.

If the heater unit 100 for a mold according to the present invention is coupled to the channel 20 of the mold, a heat transfer medium is then introduced into the channel 20 through an inlet port 12. The heat transfer medium may be selected from water, moisture and oil. After the channel 20 is completely filled with the heat transfer medium, the heat transfer medium exists in a sealed state inside of the channel 20.

In the present invention, a position where the heat transfer medium exists has a very important meaning, as described below in detail. The channel 20 has a certain hole shape for heating or cooling the mold, so that the channel 20 defines a predetermined channel volume V_{ch}. Meanwhile, the heater unit 100 for a mold, which is inserted into the channel 20, is located in an inner center portion of the channel 20 and defines a heater unit volume V_{hu.} Thus, the heat transfer medium exists between the channel 20 and the heater unit 100. Also, in this case, a volume Vₕₜ of the heat transfer medium is obtained by subtracting the heater unit volume Vₕᵤ from the channel volume V_{ch} (i.e., Vₕₜ = V_{ch} -Vₕᵤ), and the heat transfer medium is located so that its radially outer peripheral surface faces the channel 20 while surrounding the center of the heater unit 100.

In the present invention, if the heat transfer medium is completely introduced into the channel 20 through the inlet port 12, an outlet port 14 connected with the outside of the channel 20 is closed, and at the same time or successively, the inlet port 12 is closed.

According to the present invention, it may be determined from the internal pressure of the channel 20 whether the channel 20 is completely filled with the heat transfer medium. An internal pressure of the channel 20 may be 1 atm or above. Also, as the internal pressure of the channel 20 is increased, the temperature of the heat transfer medium existing in the channel 20 can be converted to high temperature. However, if the internal pressure is too high, there may cause problems in design and safety of a mold, so that the internal pressure of the channel 20 is preferably 20 atm or below.

In the present invention, the internal pressure of the channel 20 may be measured by a pressure sensor 55, which is preferably installed to a heat transfer medium supply pipe 62 connected to the inlet port 12. If the internal pressure of the channel 20 is measured by the pressure sensor 55, the measured internal pressure is transmitted to a controller (not shown). Then, if the measured internal pressure reaches a set pressure inputted by a user, the controller preferably automatically closes the inlet port 12 and the outlet port 14.

The method of rapidly heating a mold according to the present invention includes a heater unit heating step S230 of directly heating a heat transfer medium existing inside of the channel 20 to increase the temperature of the mold 10 when the channel 20 is fully filled with the heat transfer medium and is closed.

In the heater unit heating step S230 of the present invention, the heater unit 100 in the channel 20 is first heated. The heater unit 100 receives electric energy from the outside so that the heater 110 generates Joule heat, and the heat transfer medium around the heater is heated due to the Joule heat. At this time, since the heat transfer medium completely surrounds the heater 110, the heat transfer medium receives all heat as it is and then its temperature gradually increases. This is caused by the structural arrangement of the present invention.

Meanwhile, based on the same calorie, the temperature of the heat transfer medium may be increased much higher in the present invention due to the functional structure of the present invention, which will be described as follows.

Generally, a calorie supplied under a constant volume condition may be expressed in terms of a mass (which is proportional to a volume under the same pressure condition) and variations of temperature and volume constant.

Namely, ΔH = m Cv (ΔT).

At this time, assuming that a mass of the entire volume of the channel is m_{ch}, a mass of the heater unit 100 is mₕᵤ, and a mass of the heat transfer medium is mₕₜ, the mass mₕₜ of the heat transfer medium is a much smaller than the mass m_{ch} of the channel (i.e., mₕₜ = m_{ch} - mₕᵤ < m_{ch}).

Thus, assuming that the heater unit 100 supplies the same calorie ΔH, if the heat transfer medium is fully filled while the heater unit 100 is not inserted into the channel 20, the heat transfer medium has a great mass and a large volume, so that the increased temperature of the heat transfer medium is lower. However, if the heater unit 100 is inserted into the channel 20 and the heat transfer medium is filled in the remaining space, the heat transfer medium has a small mass and a small volume, so that the increased temperature of the heat transfer medium may be higher.

In the present invention, the heat transfer medium existing in the channel 20 is directly heated by the heater unit 100, so that the temperature of the heat transfer medium is increased to a high temperature. As explained above, the present invention makes it possible to obtain the high temperature of the heat transfer medium with a small calorie by the heater unit 100 and to increase the temperature of the heat transfer medium to 120°C to 300°C in a pressurized state. If necessary for the working conditions, the internal pressure of the channel 20 may be set much higher, so that the temperature of the heat transfer medium may be increased much more.

In the present invention, if the temperature of the heat transfer medium is increased to a high temperature, the heat naturally moves from a high temperature portion to a low temperature portion, thereby heating the mold 10. The temperature of the mold 10 may be determined depending on the plastic material molded in the cavity 30.

The method of rapidly heating a mold according to the present invention includes a molding step S240 of molding a molded article in the mold 10 if the mold 10 reaches a predetermined temperature necessary for molding a molded article in the cavity 30. This molding step may be performed in a general manner. For example, the cavity 30 is filled with a melt of a plastic resin through an injecting unit and a flow runner, and then, if the cavity 30 is fully filled with the melt, the plastic molded article in the cavity 30 is made into a predetermined shape.

If the molding work by the mold is completed, the method of rapidly heating a mold according to the present invention executes a mold cooling step S250.

In the present invention, the mold cooling step S250 starts with rapidly and continuously putting a new low temperature heat transfer medium into the channel 20 through the inlet port 12 from the outside. At this time, if the inlet port 12 and the outlet port 14 are opened and then the new heat transfer medium is put into the channel 20 from the outside, the existing high temperature heat transfer medium having existed in the channel 20 is pushed out. Then, the new low temperature heat transfer medium enters the channel, so that the high temperature heat is transferred from the mold to the low temperature heat transfer medium. The low temperature heat transfer medium absorbs high temperature heat and then is discharged to the outside through the outlet port 14, and a new low temperature heat transfer medium is introduced again.

In the present invention, the mold cooling step S250 is executed in a more efficient and rapid way than a conventional cooling step due to the following reasons.

In the present invention, the heater unit 100 is inserted into the channel 20, and the new low temperature heat transfer medium flows through a narrow gap defined between the heater unit 100 and the channel 20. At this time, the heat transfer medium flowing through the narrow gap moves much faster than a general heat transfer medium flowing in the channel 20 according to Bernoulli's principle, and the amount of low temperature heat transfer medium newly flowing per a unit time is greatly increased as much. Thus, according to the method of the present invention, the temperature at the inner surface of the channel 20 is decreased much faster as compared with a conventional case, and accordingly, a cooling speed is also increased as much.

In the present invention, if the temperature of the mold 10 is lowered to a predetermined temperature, the mold cooling step S250 preferably ends and proceeds to the next step. The predetermined temperature may vary according to properties of the molded article to be made. If the mold cooling step S250 is completed, a step of taking out the molded article in the cavity 30 may be performed.

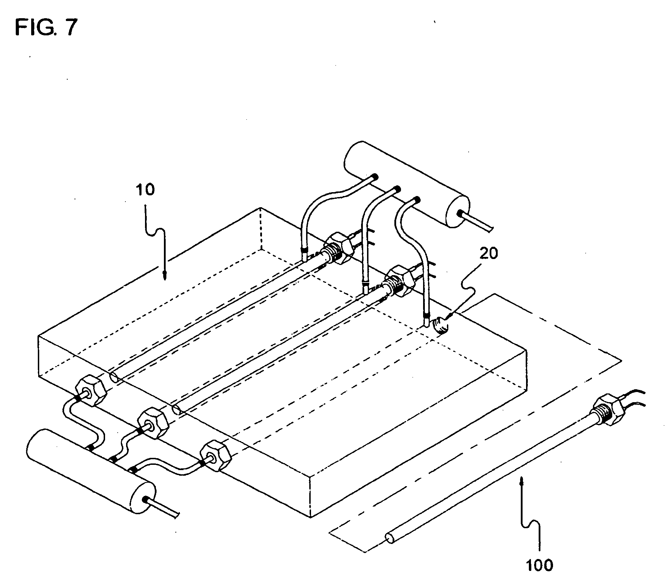

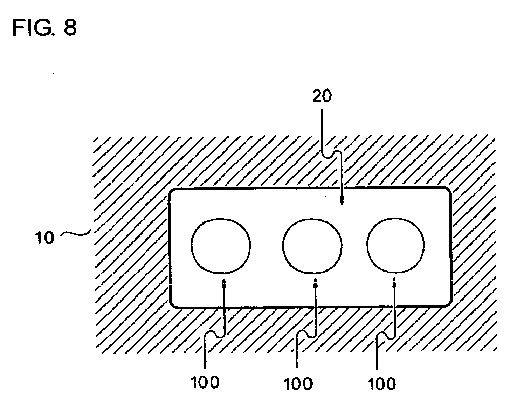

Figs. 7 and 8 show embodiments of installing a plurality of heater units 100 to one mold 10, when the method of rapidly heating a mold according to the present invention is implemented. Fig. 7 shows an embodiment that three heater units 100 are respectively used for three channels 20 and installed in parallel, and Fig. 8 shows an embodiment that three heater units 100 are used for one channel 20.

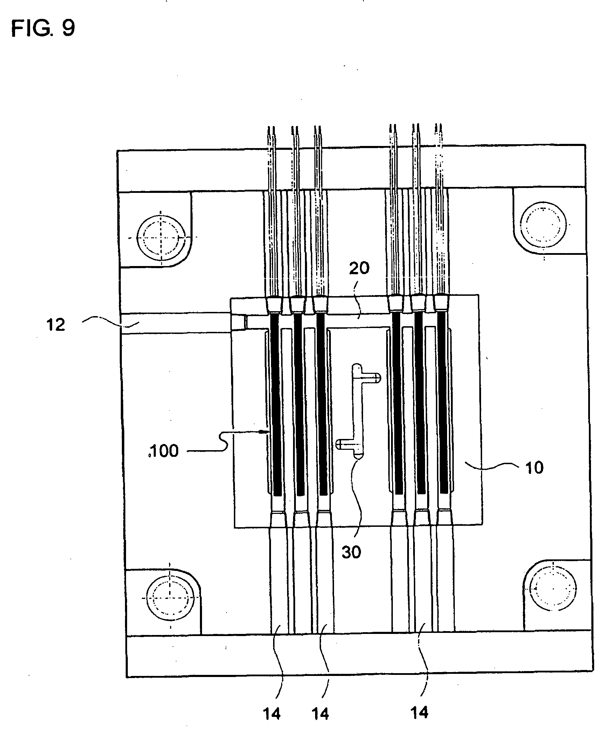

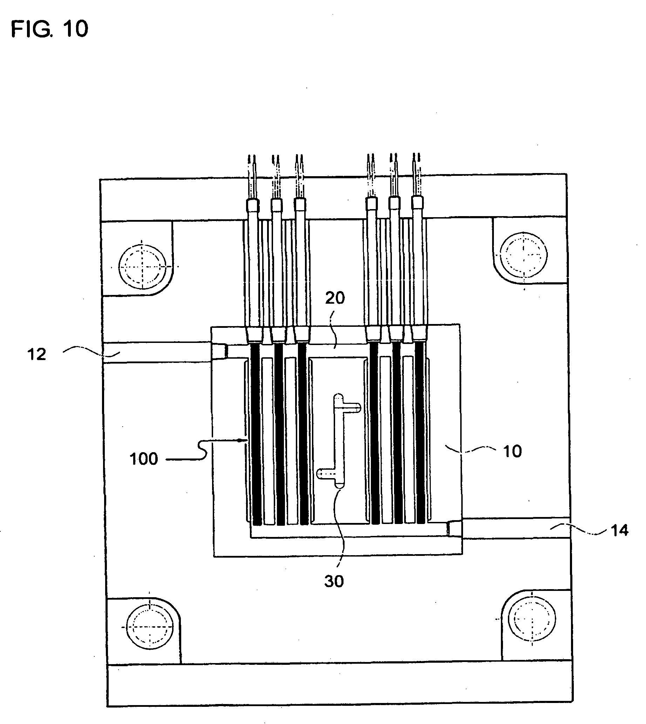

In addition, Figs. 9 and 10 show embodiments that the method of rapidly heating a mold according to the present invention is practically used for a mold. Fig. 9 shows an embodiment that a heat transfer medium is supplied to all channels 20 through one inlet port 12 of the mold 10 and also the channels 20 respectively have outlet ports 14, and Fig. 10 shows an embodiment that a heat transfer medium is supplied to all channels through one inlet port 12 of the mold 10 and also the channels discharges the heat transfer medium through one outlet port 14.

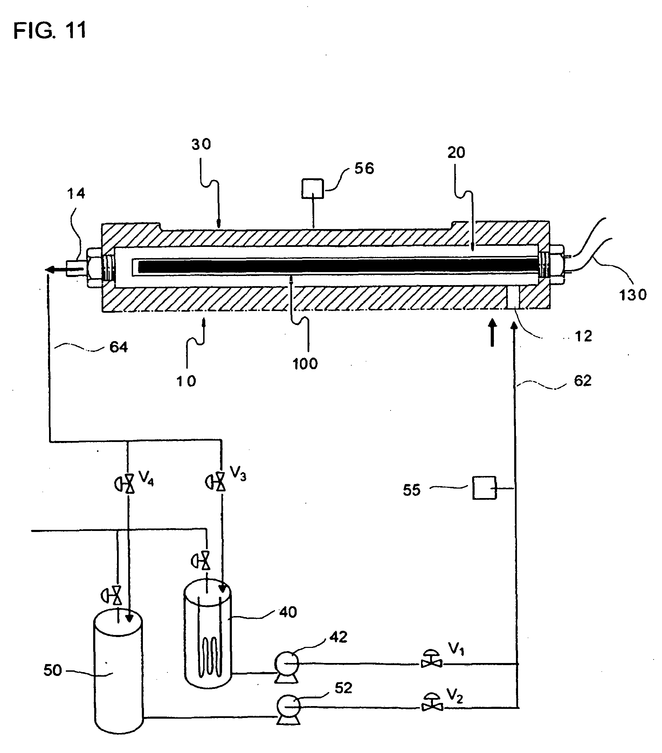

Fig. 11 is a schematic view showing an experimental example practically implementing the method of rapidly heating a mold according to the present invention. From the experiment, the following experimental results were obtained.

### <Measurement Example 1>

The heater unit 100 according to the present invention was inserted into the channel 20. Here, the channel 20 had an inner diameter of 13 mm, the protective member of the heater unit 100 had an outer diameter of 8 mm, the heater (heating coil) has a length of 1000 mm, the heating coil had a capacity of 2000W, and a thickness between the inner periphery of the channel 20 and the cavity 30 was set to 7 mm. In this state, the inlet port 12 was coupled to an external heat transfer medium supply pipe 62, the outlet port 14 was coupled to an external heat transfer medium retrieve pipe 64, a pressure sensor 55 was installed to measure an internal pressure of the heat transfer medium supply pipe 62, and a temperature sensor 56 was installed to the surface of the cavity 30 to measure a surface temperature of the cavity 30.

In the present invention, water was selected as the heat transfer medium of this experimental example. As a storage for the heat transfer medium, a warm water reservoir 40 for a heating stage and a cold water reservoir 50 for a cooling stage were distinguishably installed. The warm water reservoir 40 and the cold water reservoir 50 were filled with water of room temperature (25°C). Also, a warm water supply pump 42 was connected to the warm water reservoir 40, and a cold water supply pump 52 was connected to the cod water reservoir 50. At this time, unexplained reference numeral V₁ designates the warm water supply valve, V₂ designates the cold water supply valve, V₃ designates a warm water retrieve valve, and V₄ designates a cold water retrieve valve.

For this experiment of the present invention, the warm water supply pump 42 was operated. At this time, the warm water supply valve V₁ and the warm water retrieve valve V₃ were opened to supply water to the heat transfer medium supply pipe 62, while the cold water supply valve V₂ and the cold water retrieve valve V₄ were closed to intercept the water in the cold water reservoir 50. When the pressure of the pressure sensor 55 reaches 2 kg/cm³, the warm water supply valve V₁ and the warm water retrieve valve V₃ were closed, and the heater 110 of the heater unit 100 was supplied with electric energy. At this time, the surface temperature of the cavity 30 was measured by the temperature sensor 56, and a time taken for the surface temperature of the cavity 30 to reach 120°C measured 22 seconds.

In this state, the cold water supply valve V₂ and the cold water retrieve valve V₄ were opened, and the cold water supply pump 52 was operated to rapidly supply and circulate the cold water in the cold water reservoir 50. The surface temperature of the cavity 30 was measured by the temperature sensor 56, and a time taken for the surface temperature of the cavity 30 to reach 60°C measured 18 seconds.

### <Measurement Example 2>

Measurement Example 2 was identical to Measurement Example 1 except that a thickness between the inner periphery of the channel 20 and the cavity 30 was set to 8 mm.

In this state, using the same measurement method, a time taken for the surface temperature of the cavity 30 to reach 120°C measured 29 seconds, and then, a time taken for the surface temperature of the cavity 30 to reach 60°C measured 20 seconds.

### <Measurement Example 3>

Measurement Example 3 was identical to Measurement Example 1 except that a thickness between the inner periphery of the channel 20 and the cavity 30 was set to 10 mm.

In this state, using the same measurement method, a time taken for the surface temperature of the cavity 30 to reach 120°C measured 37 seconds, and then, a time taken for the surface temperature of the cavity 30 to reach 60°C measured 24 seconds.

According to Experiment Examples 1 to 3, about 30 seconds were taken for the surface temperature of the cavity 30 to reach 120°C, from which it was found that the cavity 30 is rapidly heated and cooled in any case although it was slightly influenced by the thickness between the channel 20 and the cavity 30. Meanwhile, in a common case, a steam of at least 150°C or above should be supplied to the channel of the mold, but such a high temperature steam is not easily made using a general boiler. Thus, a conventional mold should be equipped with a high pressure pipe system for the high temperature steam from the boiler to the mold. Accordingly, comparative examples for direct comparison with the present invention were not performed.

### [Industrial Applicability]

The method of rapidly heating a mold according to the present invention may be usefully applied to industries where a plastic is molded.

The method of rapidly heating a mold according to the present invention and the heater unit for a mold suitable for the method have been described in detail above. However, the above descriptions just show the most preferred embodiments, and the scope of the present invention is not limited thereto but is defined by the appended claims.

Also, it will be apparent that those skilled in the art can make various modifications and changes thereto within the scope of the invention, according to the appended claims.

## Claims

1. A method of rapidly heating a mold, comprising:
a) a heater unit coupling step (S210) of inserting a heater unit (100) into a channel (20) of a mold (10) and coupling the heater unit (100) to the mold (10);
b) a heat transfer medium filling step (S220) of introducing a heat transfer medium into the channel (20) through an inlet port (12) connected to the inside of the channel (20) and closing an outlet port (14) connected to the outside of the channel (20) and the inlet port (12) connected to the inside of the channel (20) when the channel (20) is filled with the heat transfer medium;
c) a heater unit heating step (S230) of heating the heater unit (100) in the channel (20) so that the temperature of the heat transfer medium is increased to a high temperature, thereby increasing the temperature of the mold (10) to a high temperature by the heat transfer medium;
d) a molding step (S240) of performing a molding work by the mold (10); and
e) a mold cooling step (S250)
**characterized in that**
f) the mold cooling step (S250) allows a new low temperature heat transfer medium to rapidly flow through a narrow gap existing between an inner surface of the channel (20) and a surface of a protective member (120) of the heater unit (100), thereby absorbing and discharging high temperature heat of the channel (20) and rapidly cooling the channel (20).

2. The method as claimed in claim 1, wherein the heater unit (100) has a shape selected from the group consisting of circular, quadrangular, polygonal and curved cylindrical shapes.

3. The method as claimed in claim 2, wherein the heater unit (100) for a mold includes one or more heaters (110) for one coupling member (140).

4. The method as claimed in claim 1, wherein an internal pressure of the channel (20) ranges from 1 to 20 atm.

5. The method as claimed in claim 1, wherein the heat generated by the heater unit (100) in the channel (20) is absorbed by the heat transfer medium surrounding the heater unit (100) as it is, and the heat absorbed by the heat transfer medium is then transferred to the mold.

## Patentansprüche

1. Verfahren zum schnellen Erwärmen einer Gussform, umfassend:
a) einen Heizeinheit-Verbindungsschritt (S210) des Einsetzens einer Heizeinheit (100) in einen Kanal (20) einer Gussform (10) und des Verbindens der Heizeinheit (100) mit der Gussform (10);
b) einen Wärmeübertragungsmediums-Füllschritt (S220) des Einführen eines Wärmeübertragungsmediums in den Kanal (20) durch einen mit dem Inneren des Kanals (20) verbundenen Einlassanschluss (12) und des Schließens eines mit dem Äußeren des Kanals (20) verbundenen Auslassanschlusses (14), wobei der Einlassanschluss (12) mit dem Inneren des Kanals (20) verbunden ist, wenn der Kanal (20) mit dem Wärmeübertragungsmedium gefüllt wird;
c) einen Heizeinheit-Erwärmungsschritt (S230) des Erwärmens der Heizeinheit (100) in dem Kanal (20), so dass die Temperatur des Wärmeübertragungsmediums auf eine hohe Temperatur erhöht wird, wodurch die Temperatur der Gussform (10) von dem Wärmeübertragungsmedium auf eine hohe Temperatur erhöht wird;
d) einen Gießschritt (S240) der Durchführung einer Gießarbeit durch die Gussform (10); und
e) einen Gussform-Kühlschritt (S250),
**dadurch gekennzeichnet, dass**
f) es der Gussform-Kühlschritt (S250) einem neuen Niedrigtemperatur-Wärmeübertragungsmedium ermöglicht, schnell durch einen engen Spalt zu fließen, der zwischen einer Innenfläche des Kanals (20) und einer Oberfläche eines Schutzelements (120) der Heizeinheit (100) existiert, wodurch Hochtemperaturwärme des Kanals (20) absorbiert und abgegeben wird und der Kanal (20) schnell gekühlt wird.

2. Verfahren, wie in Anspruch 1 beansprucht, wobei die Heizeinheit (100) eine Form hat, die aus der Gruppe ausgewählt ist, die aus einer kreisförmigen, einer rechteckigen, einer polygonalen und einer gekrümmten zylindrischen Form besteht.

3. Verfahren, wie in Anspruch 2 beansprucht, wobei die Heizeinheit (100) für eine Gussform einen oder mehrere Heizer (110) für ein Verbindungselement (140) enthält.

4. Verfahren, wie in Anspruch 1 beansprucht, wobei ein Innendruck des Kanals (20) im Bereich von 1 bis 20 atm liegt.

5. Verfahren, wie in Anspruch 1 beansprucht, wobei die von der Heizeinheit (100) in dem Kanal (20) erzeugte Wärme von dem Wärmeübertragungsmedium absorbiert wird, welches die Heizeinheit (100) so wie sie ist umgibt, und die von dem Wärmeübertragungsmedium absorbierte Wärme dann auf die Gussform übertragen wird.

## Revendications

1. Procédé de chauffage rapide d'un moule, comprenant :
a) une étape de couplage d'unité de chauffage (S210) consistant à insérer une unité de chauffage (100) dans un canal (20) d'un moule (10) et à coupler l'unité de chauffage (100) avec le moule (10) ;
b) une étape de remplissage de moyen de transfert de chaleur (S220) consistant à introduire un moyen de transfert de chaleur dans le canal (20) par un orifice d'entrée (12) relié à l'intérieur du canal (20) et à fermer un orifice de sortie (14) relié à l'extérieur du canal (20) et l'orifice d'entrée (12) relié à l'intérieur du canal (20) lorsque le canal (20) est rempli du moyen de transfert de chaleur ;
c) une étape de chauffage d'unité de chauffage (S230) consistant à chauffer l'unité de chauffage (100) dans le canal (20) de sorte que la température du moyen de transfert de chaleur soit augmentée à une température élevée, augmentant ainsi la température du moule (10) à une température élevée par le moyen de transfert de chaleur ;
d) une étape de moulage (S240) consistant à réaliser un travail de moulage par le moule (10) ; et
e) une étape de refroidissement de moule (S250)
**caractérisé en ce que**
f) l'étape de refroidissement de moule (S250) permet à un nouveau moyen de transfert de chaleur basse température de s'écouler rapidement par une fente étroite existant entre une surface intérieure du canal (20) et une surface d'un élément protecteur (120) de l'unité de chauffage (100), absorbant et évacuant une chaleur haute température du canal (20) et refroidissant rapidement le canal (20) ainsi.

2. Procédé selon la revendication 1, dans lequel l'unité de chauffage (100) a une forme sélectionnée dans le groupe composé des formes circulaire, quadrangulaire, polygonale et cylindrique courbée.

3. Procédé selon la revendication 2, dans lequel l'unité de chauffage (100) pour un moule inclut un ou plusieurs chauffages (110) pour un élément de couplage (140).

4. Procédé selon la revendication 1, dans lequel une pression interne du canal (20) varie de 1 à 20 atm.

5. Procédé selon la revendication 1, dans lequel la chaleur générée par l'unité de chauffage (100) dans le canal (20) est absorbée par le moyen de transfert de chaleur entourant l'unité de chaleur (100) dans l'état actuel et la chaleur absorbée par le moyen de transfert de chaleur est ensuite transférée au moule.
